# EUROPÄISCHE PATENTSCHRIFT

(11) **EP 3 509 797 B1**
(45) Veröffentlichungstag und Bekanntmachung des Hinweises auf die Patenterteilung: **11.01.2023**
(21) Anmeldenummer: 18726389.2
(22) Anmeldetag: 15.05.2018
(51) Int. Cl.: B25C 1/00, B25C 1/04

(54) **DRUCKLUFTNAGLER MIT AUTOMATIKBETRIEB UND EINEM AUFSETZFÜHLER**
COMPRESSED AIR NAILER WITH AUTOMATIC OPERATING MODE AND A CONTACT SENSOR
CLOUEUSE PNEUMATIQUE À MODE AUTOMATIQUE ET COMPRENANT UN CAPTEUR DE CONTACT

(30) Priorität: 07.07.2017 DE 202017104073 U
(43) Veröffentlichungstag der Anmeldung: 17.07.2019
(73) Patentinhaber: BeA GmbH, 22926 Ahrensburg (DE)
(72) Erfinder: BAUER, Joachim, 23843 Bad Oldesloe (DE)
(74) Vertreter: Cohausz & Florack
(86) Internationale Anmeldenummer: PCT/EP2018/062459
(87) Internationale Veröffentlichungsnummer: WO 2019/007575

(56) Entgegenhaltungen:
- DE-A1- 4 032 231
- DE-A1-102013 106 657
- US-A- 3 572 572
- US-A- 3 673 923
- US-A1- 2001 006 183

## Beschreibung

Die Erfindung betrifft einen Druckluftnagler mit einem Arbeitskolben, der mit einem Eintreibstößel zum Eintreiben eines Befestigungsmittels verbunden ist und beim Auslösen eines Eintreibvorgangs mit Druckluft beaufschlagt wird, und einer Auslöseeinrichtung, die einen handbetätigbaren Auslöser, einen Aufsetzfühler und ein Kraftübertragungselement aufweist, das mit dem Auslöser und dem Aufsetzfühler zusammenwirkt, so dass es bei gemeinsamer Betätigung des Auslösers und des Aufsetzfühlers ein Steuerventil betätigen und einen Eintreibvorgang auslösen kann.

Derartige Druckluftnagler sind aus dem Stand der Technik bekannt. Bei dem Aufsetzfühler handelt es sich um ein mechanisches Bauteil, das von einer Feder in einer über ein Mündungswerkzeug des Druckluftnaglers überstehenden Position gehalten wird. Wird der Druckluftnagler an ein Werkstück angesetzt, wird der Aufsetzfühler gegen die Kraft der Feder verlagert, bis das Mündungswerkzeug an dem Werkstück anliegt. Nur bei derart betätigtem Aufsetzfühler kann ein Eintreibvorgang ausgelöst werden. Dadurch bieten die Druckluftnagler im Vergleich zu Geräten ohne Aufsetzfühler einen wirksamen Schutz vor unbeabsichtigten Auslösungen.

Für eine Einzelauslösung werden Druckluftnagler dieser Bauart zunächst an ein Werkstück angesetzt, wodurch der Aufsetzfühler betätigt wird. Nachfolgend wird von Hand der Auslöser betätigt und dadurch ein einzelner Eintreibvorgang ausgelöst. Diese Arbeitsweise wird auch als Einzelauslösebetrieb bezeichnet.

Bei einigen Druckluftnaglern mit einem Aufsetzfühler ist auch ein sogenannter Kontaktauslösebetrieb möglich, auch bezeichnet als "Touchen". Dann kann bei dauerhaft betätigtem Auslöser ein Eintreibvorgang durch Betätigen des Aufsetzfühlers ausgelöst werden. In der Praxis kann der Druckluftnagler mehrfach nacheinander an ein Werkstück angesetzt und wieder davon entfernt werden, so dass gegebenenfalls eine Vielzahl von Befestigungsmitteln in schneller Folge eingetrieben werden kann. Dieser Kontaktauslösebetrieb geht jedoch mit einem erhöhten Verletzungsrisiko einher, falls ein unachtsamer Benutzer bei betätigtem Auslöser unabsichtlich den Aufsetzfühler betätigt - zum Beispiel falls er beim Besteigen einer Leiter mit dem Druckluftnagler versehentlich sein Bein streift. Um dieses Verletzungsrisiko auszuschalten, sind spezielle Druckluftnagler mit einer Zeitsteuerung bekannt geworden, bei denen eine Kontaktauslösung immer nur für kurze Zeit nach einer vorherigen Auslösung möglich ist. Ein Beispiel ist in der Patentschrift EP 2 767 365 B1 beschrieben.

Ebenfalls bekannt sind Druckluftnagler mit einem Aufsetzfühler, die in einen Automatikbetrieb versetzt werden können. Wird der Auslöser bei an das Werkstück angesetztem Druckluftnagler dauerhaft betätigt, werden fortlaufend Befestigungsmittel eingetrieben. Auf diese Weise können sehr schnell viele Befestigungsmittel verarbeitet werden. Der Automatikbetrieb endet, sobald der Auslöser losgelassen oder der Druckluftnagler von dem Werkstück entfernt wird. Bei bekannten Automatikgeräten spielt die Reihenfolge der Betätigung von Auslöser und Aufsetzfühler keine Rolle. Die erste Auslösung kann daher sowohl durch Betätigen des Auslösers nach dem Ansetzen des Geräts an ein Werkstück als auch bei betätigtem Auslöser per Kontaktauslösung vorgenommen werden. Die Möglichkeit einer unbeabsichtigten Kontaktauslösung bedeutet auch bei diesen Geräten ein erhöhtes Verletzungsrisiko. Aus der US 3 572 572 A ist ein Druckluftnagler gemäß dem Oberbegriff des Anspruchs 1 bekannt. Relevanter Stand der Technik kann auch in der DE 10 2013 106657 A1, in der US 2001/006183 A1 und in der US2009/0242604 A1 gefunden werden.

Davon ausgehend ist es die Aufgabe der Erfindung, einen Druckluftnagler zur Verfügung zu stellen, mit dem ein sichereres Arbeiten im Automatikbetrieb möglich ist.

Diese Aufgabe wird gelöst durch den Druckluftnagler mit den Merkmalen des Anspruchs 1. Vorteilhafte Ausgestaltungen sind in den Unteransprüchen angegeben. Der Druckluftnagler hat
- einen Arbeitskolben, der mit einem Eintreibstößel zum Eintreiben eines Befestigungsmittels verbunden ist und beim Auslösen eines Eintreibvorgangs mit Druckluft beaufschlagt wird, und
- eine Auslöseeinrichtung, die einen handbetätigbaren Auslöser, einen Aufsetzfühler und ein Kraftübertragungselement aufweist, das mit dem Auslöser und dem Aufsetzfühler zusammenwirkt, so dass es bei gemeinsamer Betätigung des Auslösers und des Aufsetzfühlers ein Steuerventil betätigen und einen Eintreibvorgang auslösen kann, wobei
- der Druckluftnagler dazu ausgebildet ist, bei dauerhafter Betätigung des Auslösers und des Aufsetzfühlers in einem Automatikbetrieb fortlaufend Befestigungsmittel einzutreiben,
- der Aufsetzfühler einen Verstellweg zwischen einer vollständig betätigten, ersten Stellung und einer vollständig unbetätigten, zweiten Stellung aufweist, und
- die Auslöseeinrichtung so ausgebildet ist, dass das Kraftübertragungselement das Steuerventil nicht betätigt, wenn der Aufsetzfühler bei betätigtem Auslöser aus der zweiten Stellung in die erste Stellung verlagert wird.

Durch die genannte Ausbildung der Auslöseeinrichtung wird verhindert, dass bei betätigtem Auslöser infolge einer unabsichtlichen Betätigung des Aufsetzfühlers ein Eintreibvorgang ausgelöst wird. Eine herkömmliche Kontaktauslösung ist nicht möglich. Stattdessen muss stets zunächst der Aufsetzfühler betätigt werden und dann der Auslöser, um einen ersten Eintreibvorgang auszulösen. Bleiben daraufhin Aufsetzfühler und Auslöser weiterhin betätigt, arbeitet das Gerät im Automatikbetrieb.

In einer Ausgestaltung ist die Auslöseeinrichtung so ausgebildet ist, dass im Automatikbetrieb bei betätigtem Auslöser das Steuerventil solange betätigt bleibt, bis der Aufsetzfühler ausgehend von der ersten Stellung entlang des Verstellwegs bis in eine Zwischenstellung, die einen vorgegebenen Abstand von der ersten Stellung aufweist, verlagert wird.

Diese Ausgestaltung beruht auf der Erkenntnis, dass der Verzicht auf die Möglichkeit einer Kontaktauslösung zu Störungen im Automatikbetrieb führen kann, die sich in einem unerwünschten Abbrechen des Automatikbetriebs äußern. Die Erfinder haben erkannt, dass die Ursache für diese Störungen darin besteht, dass der beim Eintreiben eines Befestigungsmittels auf den Druckluftnagler einwirkende Rückstoß zu einem leichten Springen des Druckluftnaglers führen kann, falls der Druckluftnagler von der Bedienperson nicht sehr exakt an dem Werkstück entlang geführt und hinreichend kräftig an dessen Oberfläche angepresst wird. Bei einem solchen Sprung kann der Aufsetzfühler schnell aus der vollständig betätigten Stellung gelangen, was bei einer herkömmlichen Ausbildung des Aufsetzfühlers zu einem sofortigen Abbruch des Automatikbetriebs führt, auch wenn der Auslöser weiterhin betätigt bleibt.

Diese Schwierigkeiten werden durch die besondere Ausbildung der Auslöseeinrichtung mit einer Zwischenstellung überwunden: Im Automatikbetrieb bleibt bei betätigtem Auslöser das Steuerventil so lange betätigt, bis der Aufsetzfühler ausgehend von der ersten, vollständig betätigten Stellung, in der er sich bei an ein Werkstück angesetztem Druckluftnagler befindet, entlang des Verstellwegs bis in eine Zwischenstellung verlagert wird. Die Zwischenstellung weist einen vorgegebenen Abstand von der ersten Stellung auf. Erst wenn der Druckluftnagler so weit von dem Werkstück entfernt wird, dass der Aufsatzfühler die Zwischenstellung erreicht, endet die Betätigung des Steuerventils und damit der Automatikbetrieb. Der vorgegebene Abstand wird bei der Erfindung so gewählt, dass er bei leichten, mehr oder weniger unvermeidlichen Sprüngen des Druckluftnaglers in der Regel nicht überschritten wird. Dadurch ist ein störungsfreies Arbeiten im Automatikbetrieb möglich.

Der Aufsetzfühler befindet sich in der zweiten, vollständig unbetätigten Stellung, wenn der Druckluftnagler so weit von dem Werkstück entfernt wird, dass der Aufsetzfühler nicht mehr im Kontakt mit dem Werkstück steht. Wird der Druckluftnagler an das Werkstück angesetzt, erfolgt eine Verlagerung des Aufsetzfühlers von der zweiten Stellung in die erste Stellung entlang des bevorzugt geradlinigen Verstellwegs.

In einer Ausgestaltung beträgt der vorgegebene Abstand 30 % oder mehr des Verstellwegs. Insbesondere kann der vorgegebene Abstand 40 % oder mehr, 50 % oder mehr, 60 % oder mehr oder, 70 % oder mehr oder sogar 80 % oder mehr des Verstellwegs betragen. Der an 100 % fehlende Anteil des Verstellwegs verbleibt für die Verstellbewegung des Aufsetzfühlers von der Zwischenstellung bis in die zweite Stellung. Durch die Aufteilung des Verstellwegs auf einen ersten Bereich zwischen erster Stellung und Zwischenstellung und einen zweiten Bereich zwischen Zwischenstellung und zweiter Stellung wird die beiden Bereichen zugeordnete Funktion zuverlässig erfüllt. Insbesondere ist der vorgegebene Abstand groß genug, um die erläuterte unbeabsichtigte Beendigung des Automatikbetriebs bei Sprüngen zu vermeiden. Gleichzeitig verbleibt ein hinreichender Verstellweg zwischen der Zwischenstellung und der zweiten Stellung, wodurch sichergestellt wird, dass ein unbeabsichtigtes Auslösen des Druckluftnaglers bei von dem Werkstück entfernter Anordnung weiterhin zuverlässig vermieden wird.

In einer Ausgestaltung beträgt der vorgegebene Abstand 3 mm oder mehr. Insbesondere kann der vorgegebene Abstand 4 mm oder mehr, 5 mm oder mehr, 6 mm oder mehr, 8 mm oder mehr oder sogar 10 mm oder mehr betragen. Je nach Anwendungsfall kann dadurch der Automatikbetrieb auch bei größeren Sprüngen unterbrechungsfrei fortgesetzt werden.

In einer Ausgestaltung weist der Verstellweg eine Gesamtlänge von 8 mm oder mehr auf. Insbesondere kann die Gesamtlänge auch 10 mm oder mehr, 12 mm oder mehr oder sogar 14 mm oder mehr betragen. Versuche haben ergeben, dass ein gegenüber herkömmlichen Druckluftnaglern in dieser Weise vergrößerter Verstellweg zu einer praktikablen Lösung führt. Insbesondere kann die Auslöseeinrichtung dann so ausgebildet werden, dass übliche Fertigungstoleranzen und unvermeidliche Verschleißerscheinungen im Bereich der Auslöseeinrichtung die Funktion nicht beeinträchtigen.

In einer Ausgestaltung weist das Steuerventil einen entlang eines Betätigungswegs zwischen einer vollständig betätigten, ersten Position und einer vollständig unbetätigten, zweiten Position beweglichen Schaltstift auf, mit einem Schaltpunkt, der an einer Zwischenposition des Schaltstifts in einem Abstand von der ersten Position angeordnet ist. Die Auslöseeinrichtung kann so auf den Betätigungsweg des Steuerventils abgestimmt sein, dass die erste Stellung des Aufsetzfühlers der ersten Position des Schaltstifts und die zweite Stellung des Aufsetzfühlers der zweiten Position des Schaltstifts entspricht. Die Zwischenstellung des Aufsetzfühlers kann der Zwischenposition des Schaltstifts entsprechen. Diese Lösung ist konstruktiv besonders einfach, weil der Schaltstift des Steuerventils beim Ansetzen des Druckluftnaglers an ein Werkstück ausgehend von dem Schaltpunkt weiter in die erste Position verlagert werden kann, wenn der Aufsetzfühler von der Zwischenstellung in die erste Stellung verlagert wird. Insbesondere kann eine im Wesentlichen lineare Kopplung zwischen Verstellweg des Aufsetzfühlers und Betätigungsweg des Steuerventils hergestellt werden. Der Schaltpunkt des Steuerventils kennzeichnet denjenigen Betriebspunkt, in dem ein Wechsel zwischen einer geschlossenen und einer geöffneten Stellung des Steuerventils oder umgekehrt erfolgt.

In einer Ausgestaltung ist das Kraftübertragungselement relativ zu dem Auslöser und dem Aufsetzfühler so angeordnet, dass ein Eingriff zwischen dem Kraftübertragungselement und dem Auslöser oder zwischen dem Kraftübertragungselement und dem Aufsetzfühler aufgehoben wird, wenn der Aufsetzfühler auf dem Weg von der ersten Stellung in die zweite Stellung die Zwischenstellung passiert. Gleichzeitig mit der Aufhebung dieses Eingriffs endet die Betätigung des Steuerventils und damit der Automatikbetrieb.

In einer Ausgestaltung ist das Kraftübertragungselement drehbar an dem Auslöser gelagert. Dies stellt eine besonders einfache Lösung einer Kopplung der Bewegung des Kraftübertragungselements an eine Bewegung des Auslösers dar.

In einer Ausgestaltung weist das Kraftübertragungselement einen Anschlag auf, der von dem Aufsetzfühler auf dem Weg von der zweiten Stellung in die erste Stellung mitgenommen wird, wenn der Aufsetzfühler bei betätigtem Auslöser die Zwischenstellung passiert. Dieses Mitnehmen des Anschlags durch den Aufsetzfühler stellt eine einfache Möglichkeit dar, einen Eingriff zwischen dem Aufsetzfühler und dem Kraftübertragungselement herzustellen.

In einer Ausgestaltung weist das Kraftübertragungselement eine Betätigungsfläche auf, die mit einem Schaltstift des Steuerventils zusammenwirkt. Dadurch kann das Kraftübertragungselement das Steuerventil unmittelbar ansteuern.

In einer Ausgestaltung ist das Kraftübertragungselement eine Wippe, deren eines Ende drehbar an dem Auslöser gelagert ist und deren anderes Ende den Anschlag aufweist. Die Wippe kann insbesondere ganz oder teilweise innerhalb des Auslösers angeordnet sein. Auf diese Weise wird eine zuverlässige und kompakte Ausgestaltung der Auslöseeinrichtung erzielt.

In einer Ausgestaltung weist der Druckluftnagler eine Zeitsteuerung auf, die im Automatikbetrieb eine Taktung für das fortlaufende Eintreiben von Befestigungsmitteln vorgibt. Die Taktung kann beispielsweise so gewählt sein, dass im Automatikbetrieb 5 bis 10 Befestigungsmittel pro Sekunde eingetrieben werden. Vorzugsweise arbeitet die Zeitsteuerung pneumatisch.

In einer Ausgestaltung weist die Zeitsteuerung eine Drossel mit einem einstellbaren Öffnungsquerschnitt auf, wobei der Öffnungsquerschnitt die Taktung bestimmt. Somit kann der Automatikbetrieb an die jeweiligen Anforderungen angepasst werden.

Nachfolgend wird die Erfindung anhand eines in sieben Figuren dargestellten Ausführungsbeispiels näher erläutert. Es zeigen:
- Figur 1: einen Druckluftnagler in einem Längsschnitt,
- Figuren 2 bis 7: jeweils einen Ausschnitt aus Figur 1, der Teile der Auslöseeinrichtung in unterschiedlichen Betriebszuständen zeigt.

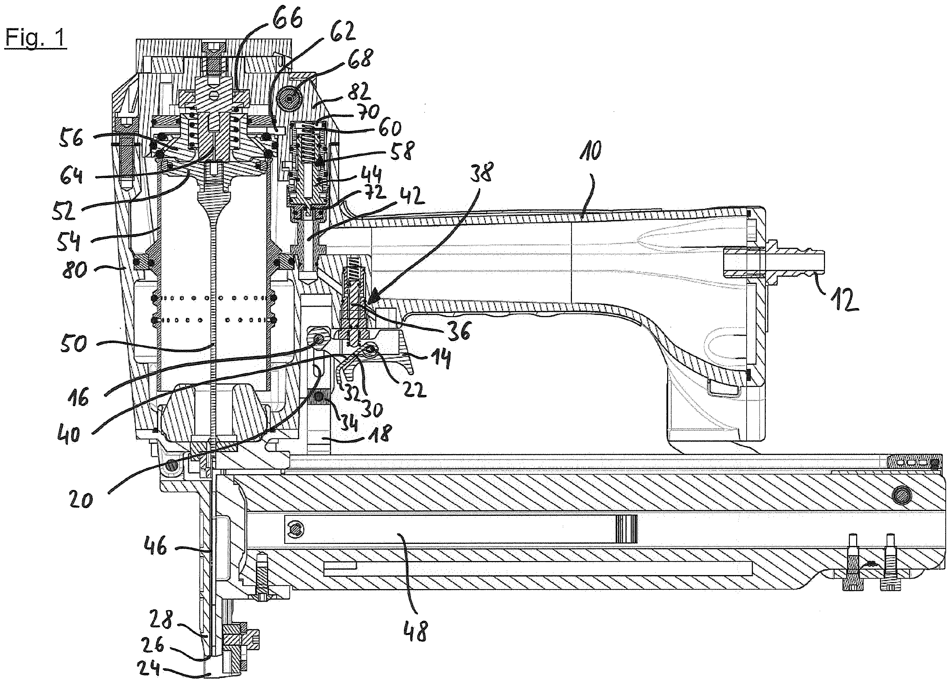

Zunächst werden anhand der Figur 1 die wichtigsten Elemente des Druckluftnaglers teils überblicksartig dargestellt. Der Druckluftnagler hat einen Handgriff 10, an dessen hinterem Ende ein zentraler Druckluftanschluss 12 angeordnet ist. Der Handgriff 10 befindet sich an einem unteren Gehäuseteil 80, das nach oben von einer Gehäusekappe 82 verschlossen ist.

Der handbetätigbare Auslöser 14 ist um eine Schwenkachse 16 schwenkbar am Gehäuse des Druckluftnaglers gelagert und so angeordnet, dass er von einem Benutzer, der den Druckluftnagler am Handgriff 10 hält, bequem mit dem Zeigefinger betätigt werden kann. Figur 1 zeigt den Auslöser 14 in betätigter Stellung.

In der in Figur 1 gezeigten, von einem Werkstück entfernten Anordnung des Druckluftnaglers steht der Aufsetzfühler 24 mit seinem vorderen Ende über eine Mündung 26 eines Mündungswerkzeugs 28 nach unten über. Dies ist die vollständig unbetätigte, zweite Stellung des Aufsetzfühlers 24. Wird der Druckluftnagler an ein Werkstück angesetzt, wird der Aufsetzfühler 24 gegen die Kraft einer nicht gezeigten Feder nach oben verlagert, bis er etwa bündig mit der Mündung 26 abschließt. Er befindet sich dann in seiner vollständig betätigten, ersten Stellung.

Der Aufsetzfühler 24 weist einen Schieber 18 auf, der sich gemeinsam mit dem vorderen Ende des Aufsetzfühlers 24 auf und ab bewegt, wenn der Aufsetzfühler 24 entlang des Verstellwegs zwischen der ersten Stellung und der zweiten Stellung hin- und herbewegt wird. In dem Schieber 18 ist ein Langloch 20 ausgebildet, durch das die Schwenkachse 16 des Auslösers 14 hindurchgeführt ist.

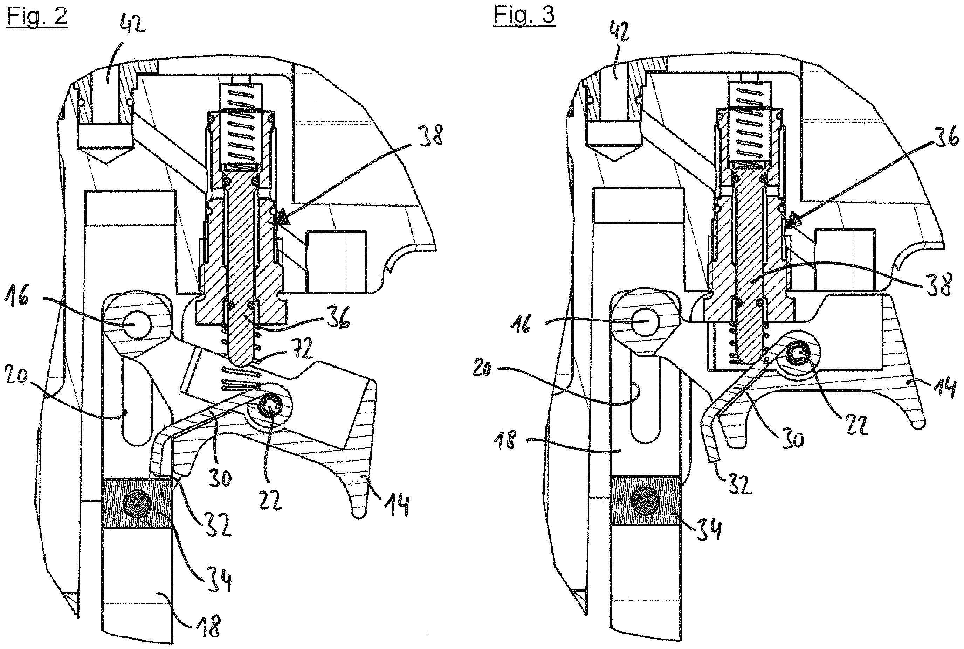

Eine Wippe 30, die als Kraftübertragungselement dient, ist an einem Ende um eine Schwenkachse 22 schwenkbar an dem Auslöser 14 gelagert. Das andere, freie Ende dieser Wippe 30 bildet einen Anschlag 32, der bei einer Aufwärtsbewegung des Aufsetzfühlers 24 entlang des Verstellwegs von einem an dem Schieber 18 ausgebildeten Mitnehmer 34 mitgenommen werden kann. In diesem Fall wird ein Steuerstift 36 eines Steuerventils 38 von einer an der Oberseite der Wippe 30 etwa in deren Mitte angeordneten Betätigungsfläche 40 nach oben verlagert, wodurch ein Eintreibvorgang ausgelöst wird. Einzelheiten der Auslöseeinrichtung mit Aufsetzfühler 24, Kraftübertragungselement (Wippe 30) und Auslöser 14 werden später anhand der Figuren 2 bis 7 näher erläutert.

Das Mündungswerkzeug 28 weist eine Aufnahme 46 auf, der jeweils ein Befestigungsmittel aus einem Magazin 48 zugeführt wird. Aus dieser Position innerhalb der Aufnahme 46 wird das Befestigungsmittel - beispielsweise ein Nagel, ein Stift oder eine Klammer - von einem Eintreibstößel 50, der mit einem Arbeitskolben 52 des Druckluftnaglers verbunden ist, eingetrieben. Hierzu ist der Arbeitskolben 52 in einem Arbeitszylinder 54 geführt. Oberhalb des Arbeitszylinders 54 und diesen dichtend verschließend ist ein Hauptventil 56 angeordnet, rechts davon ein Vorsteuerventil 58.

Bei Betätigung des Steuerventils 38 wird ein Steuerraum 42 belüftet. Dadurch wird ein Steuerkolben 44 des Vorsteuerventils 58 gegen die Kraft einer Feder 60 nach oben verlagert. In der Folge wird eine Kammer 62 über das Vorsteuerventil 58 entlüftet, so dass sich das Hauptventil 56 öffnet und Druckluft oberhalb des Arbeitskolbens 52 in den Arbeitszylinder 54 einströmt, also ein Eintreibvorgang ausgelöst wird.

Während das Hauptventil 56 geöffnet ist, strömt außerdem Druckluft durch eine Bohrung 64 zu einer Zwischenkammer 66 und von dort über eine Drossel 68 zu einem Steuerraum 70 des Vorsteuerventils 58. Dieser ist oberhalb des Steuerkolbens 44 des Vorsteuerventils 58 angeordnet. Wird eine Druckschwelle in dem Steuerraum 70 überschritten, gelangt der Steuerkolben 44 zurück in die gezeichnete, untere Stellung, so dass die Kammer 62 wieder belüftet wird, das Hauptventil 56 schließt und der Arbeitskolben 52 in seine gezeichnete Ausgangsstellung zurückgeführt wird.

Bei der Verlagerung des Steuerkolbens 44 in die untere Stellung fährt der Steuerkolben 44 zugleich aus der Dichtung des O-Rings 72. Ist zu diesem Zeitpunkt das Steuerventil 38 weiterhin betätigt, wird der Steuerkolben 44 daraufhin erneut nach oben verlagert, und es erfolgt ein weiterer Eintreibvorgang. Die Taktung der in diesem Automatikbetrieb aufeinanderfolgenden Eintreibvorgänge kann durch Verstellen der einstellbaren Drossel 68 angepasst werden.

Anhand der Figuren 2 bis 4 wird erläutert, wie das Zusammenspiel von Auslöser 14, Aufsetzfühler 24 und Wippe 30 unbeabsichtigte Auslösungen verhindern kann. Figur 2 zeigt die Ausgangsstellung der Auslöseeinrichtung, d. h. den Auslöser 14 in unbetätigter Stellung und den Aufsetzfühler 24 mit Schieber 18 in seiner zweiten Stellung.

Der Steuerstift 36 befindet sich in einer zweiten Position, unterhalb eines Schaltpunkts des Steuerventils 38, sodass das Steuerventil 38 nicht betätigt ist.

Wird ausgehend von der Situation aus Figur 2 zunächst der Auslöser 14 betätigt, ergibt sich die in Figur 3 gezeigte Anordnung. Die Wippe 30 weist weiterhin von der Schwenkachse 22 aus schräg nach unten, sodass das Steuerventil 38 nicht betätigt wird. Durch die Verlagerung der Schwenkachse 22 infolge der Betätigung des Auslösers 14 wird die Wippe 30 insgesamt gegenüber der Anordnung aus Figur 2 nach rechts verlagert, sodass der Anschlag 32 in einem seitlichen Abstand von dem Mitnehmer 34 angeordnet ist.

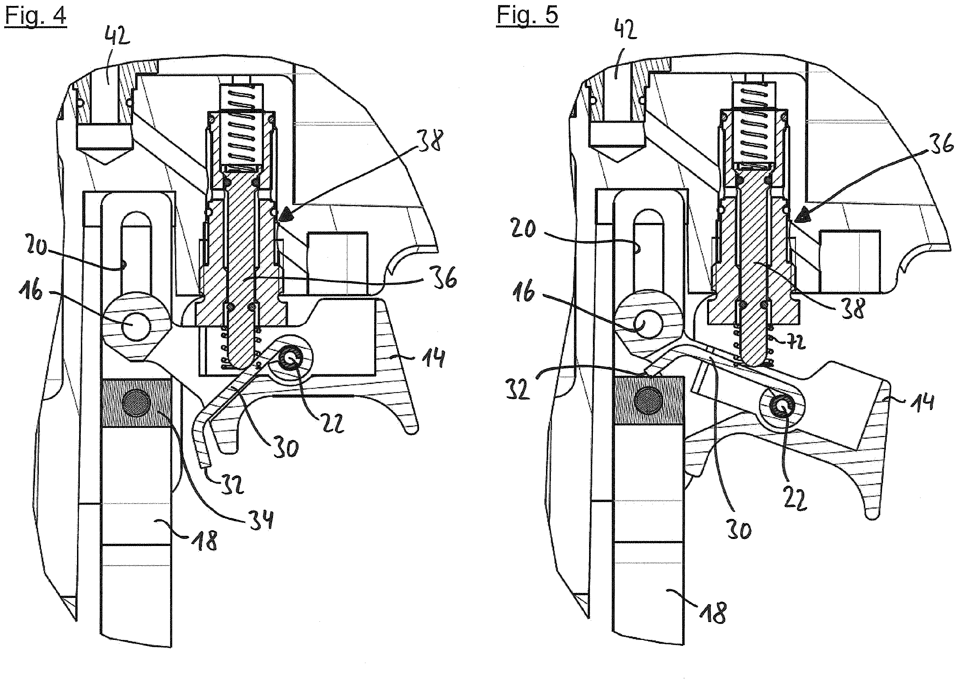

Wird anschließend der Druckluftnagler an ein Werkstück angesetzt, führt dies zu einer Verlagerung des Aufsetzfühlers 24 mit dem Schieber 18 von der zweiten Stellung aus den Figuren 2 und 3 entlang des Verstellwegs in die in Figur 4 gezeigte, erste und vollständig betätigte Stellung. Wegen des seitlichen Abstands zwischen Mitnehmer 34 und Anschlag 32 der Wippe 30 nimmt der Mitnehmer 34 den Anschlag 32 der Wippe 30 entlang dieses Verstellwegs nicht mit, so dass die Position der Wippe 30 gegenüber der Situation aus Figur 3 unverändert bleibt und das Steuerventil 38 nicht betätigt wird. Ein versehentliches Auslösen bei betätigtem Auslöser 14 durch eine unbeabsichtigte Berührung des Aufsetzfühlers 24 wird dadurch ausgeschlossen.

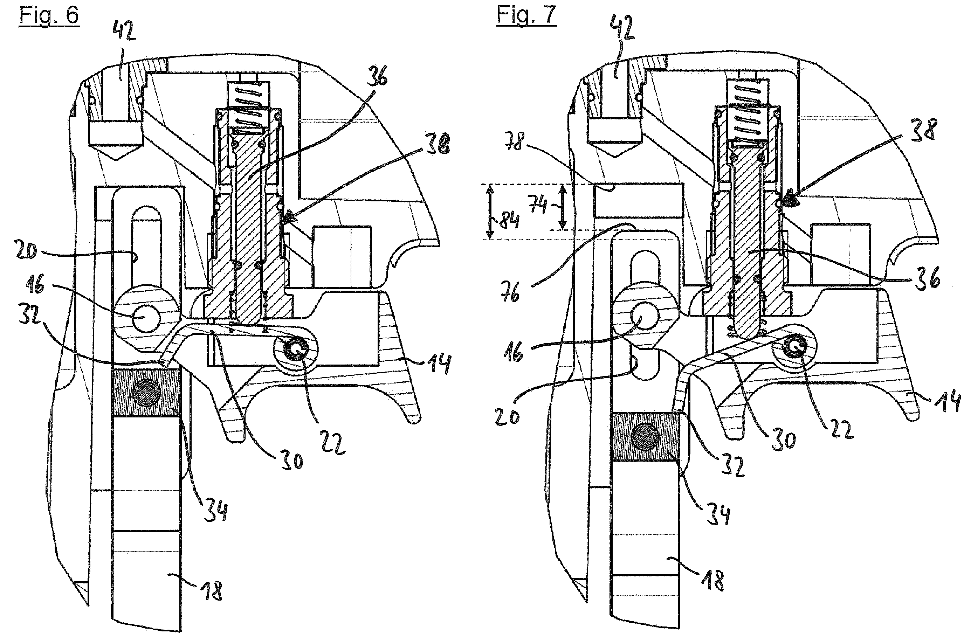

Anhand der Figuren 5 und 6 wird erläutert, wie es zu einer Einzelauslösung kommt, wenn Aufsetzfühler 24 und Auslöser 14 in der richtigen Reihenfolge betätigt werden. Hierzu zeigt Figur 5 zunächst diejenige Anordnung, die sich ergibt, wenn der Druckluftnagler ausgehend von dem in Figur 2 gezeigten Grundzustand zunächst bei nicht betätigtem Auslöser 14 an ein Werkstück angesetzt wird. Dadurch wird nämlich der Aufsetzfühler 24 mit Schieber 18 in seine in Figur 5 gezeigte, erste Stellung verlagert. Entlang dieses Verstellwegs nimmt der Mitnehmer 34 dabei den Anschlag 32 der Wippe 30 mit, sodass die Wippe 30 bei unbetätigtem Auslöser 14 ausgehend von der Schwenkachse 22 schräg nach oben weist. In dieser Stellung wird das Steuerventil 38 noch nicht betätigt.

Wird ausgehend von der Anordnung aus Figur 5 bei weiterhin an das Werkstück angesetzten Druckluftnagler der Auslöser 14 betätigt, ergibt sich die in Figur 6 gezeigte Situation. Durch das Betätigen des Auslösers 14 wird die Schwenkachse 22 nach oben bewegt, während sich der Anschlag 32 der Wippe 30 auf dem Mitnehmer 34 abstützt. Die Wippe 32 gelangt dadurch in eine annähernd waagerechte Stellung, in der die Betätigungsfläche 40 der Wippe das Steuerventil 38 betätigt.

Genauer wird der Steuerstift 36 des Steuerventils 38 in die in Figur 6 gezeigte, erste Position verlagert. In dieser Position befindet er sich oberhalb eines Schaltpunkts des Steuerventils 38 und das Steuerventil 38 ist dementsprechend betätigt. Sobald das Steuerventil 38 betätigt wird, wird ein erster Eintreibvorgang ausgelöst, wie vorstehend anhand der Figur 1 erläutert. Bleiben Aufsetzfühler 24 und Auslöser 14 dann weiterhin in ihren jeweiligen, betätigten Stellungen, befindet sich der Druckluftnagler im Automatikbetrieb und es werden fortlaufend Befestigungsmittel eingetrieben.

Figur 7 zeigt die Auslöseeinrichtung bei betätigtem Auslöser 14 in einer Situation, in der der Druckluftnagler infolge eines Sprungs ein Stück weit von dem Werkstück entfernt angeordnet ist. Der Aufsetzfühler 24 mit Schieber 18 befindet sich in einer mittleren Stellung, kurz bevor er auf dem Weg von der ersten Stellung in die zweite Stellung die Zwischenstellung erreicht. Der Anschlag 32 der Wippe 30 stützt sich in dieser mittleren Stellung des Aufsetzfühlers gerade noch an dem Mitnehmer 34 ab. Der in Figur 7 eingezeichnete Abstand 74 zwischen einem oberen Ende 76 des Schiebers 18 und einem am unteren Gehäuseteil 80 ausgebildeten Anschlag 78, an dem das obere Ende 76 des Schiebers in der ersten Stellung des Aufsetzschieber 24 anliegt (was in Figur 6 erkennbar ist), ist etwas kleiner als der in der Figur 7 ebenfalls eingezeichnete, vorgegebene Abstand 84 zwischen der ersten Stellung und der Zwischenstellung.

Wird der Aufsetzfühler 24 und damit der Schieber 18 mit Mitnehmer 34 ausgehend von der Stellung der Figur 7 nur geringfügig weiter nach unten verlagert, erreicht er seine Zwischenstellung, in der der Anschlag 32 der Wippe 30 von dem Mitnehmer 34 abgleitet und der Steuerstift 36 des Steuerventils 38 seine Zwischenposition erreicht und den Schaltpunkt überschreitet, sodass das Steuerventil 38 nicht länger in der betätigten Stellung verbleibt und der Automatikbetrieb endet. Bei Sprüngen des Druckluftnaglers bis zu einer Höhe, die der Stellung des Aufsetzfühlers 24 aus Figur 7 entspricht, kann der Automatikbetrieb jedoch störungsfrei fortgesetzt werden.

### Liste der verwendeten Bezugszeichen:

- 10: Handgriff
- 12: Druckluftanschluss
- 14: Auslöser
- 16: Schwenkachse des Auslösers 14
- 18: Schieber
- 20: Langloch
- 22: Schwenkachse der Wippe 30
- 24: Aufsetzfühler
- 26: Mündung
- 28: Mündungswerkzeug
- 30: Wippe
- 32: Anschlag
- 34: Mitnehmer
- 36: Steuerstift
- 38: Steuerventil
- 40: Betätigungsfläche
- 42: Steuerraum
- 44: Steuerkolben
- 46: Aufnahme
- 48: Magazin
- 50: Eintreibstößel
- 52: Arbeitskolben
- 54: Arbeitszylinder
- 56: Hauptventil
- 58: Vorsteuerventil
- 60: Feder
- 62: Kammer
- 64: Bohrung
- 66: Zwischenkammer
- 68: Drossel
- 70: Steuerraum
- 72: Feder
- 74: Abstand
- 76: oberes Ende des Schiebers 18
- 78: Anschlag
- 80: Unteres Gehäuseteil
- 82: Gehäusekappe
- 84: Vorgegebener Abstand

## Patentansprüche

1. Druckluftnagler mit
• einem Arbeitskolben (52), der mit einem Eintreibstößel (50) zum Eintreiben eines Befestigungsmittels verbunden ist und beim Auslösen eines Eintreibvorgangs mit Druckluft beaufschlagt wird, und
• einer Auslöseeinrichtung, die einen handbetätigbaren Auslöser (14), einen Aufsetzfühler (24) und ein Kraftübertragungselement aufweist, das mit dem Auslöser (14) und dem Aufsetzfühler (24) zusammenwirkt, sodass es bei gemeinsamer Betätigung des Auslösers (14) und des Aufsetzfühlers (24) ein Steuerventil (38) betätigen und einen Eintreibvorgang auslösen kann, wobei
• der Druckluftnagler dazu ausgebildet ist, bei dauerhafter Betätigung des Auslösers (14) und des Aufsetzfühlers (24) in einem Automatikbetrieb fortlaufend Befestigungsmittel einzutreiben,
• der Aufsetzfühler (24) einen Verstellweg zwischen einer vollständig betätigten, ersten Stellung und einer vollständig unbetätigten, zweiten Stellung aufweist, und **dadurch gekennzeichnet, dass**
• die Auslöseeinrichtung so ausgebildet ist, dass das Kraftübertragungselement das Steuerventil (38) nicht betätigt, wenn der Aufsetzfühler (24) bei betätigtem Auslöser (14) aus der zweiten Stellung in die erste Stellung verlagert wird.

2. Druckluftnagler nach Anspruch 1, **dadurch gekennzeichnet, dass** die Auslöseeinrichtung so ausgebildet ist, dass im Automatikbetrieb bei betätigtem Auslöser (14) das Steuerventil (38) solange betätigt bleibt, bis der Aufsetzfühler (24) ausgehend von der ersten Stellung entlang des Verstellwegs bis in eine Zwischenstellung, die einen vorgegebenen Abstand (84) von der ersten Stellung aufweist, verlagert wird.

3. Druckluftnagler nach Anspruch 2, **dadurch gekennzeichnet, dass** der vorgegebene Abstand (84) 30 % oder mehr des Verstellwegs beträgt.

4. Druckluftnagler nach Anspruch 2 oder 3, **dadurch gekennzeichnet, dass** der vorgegebene Abstand (84) 3 mm oder mehr beträgt.

5. Druckluftnagler nach einem der Ansprüche 1 bis 4, **dadurch gekennzeichnet, dass** der Verstellweg eine Gesamtlänge von 8 mm oder mehr aufweist.

6. Druckluftnagler nach einem der Ansprüche 1 bis 5, **dadurch gekennzeichnet, dass** das Steuerventil (38) einen entlang eines Betätigungswegs zwischen einer vollständig betätigten, ersten Position und einer vollständig unbetätigten, zweiten Position beweglichen Schaltstift (36) aufweist, mit einem Schaltpunkt, der an einer Zwischenposition des Schaltstifts (36) in einem Abstand von der ersten Position angeordnet ist.

7. Druckluftnagler nach einem der Ansprüche 1 bis 6, **dadurch gekennzeichnet, dass** das Kraftübertragungselement relativ zu dem Auslöser (14) und dem Aufsetzfühler (24) so angeordnet ist, dass ein Eingriff zwischen dem Kraftübertragungselement und dem Auslöser (14) oder zwischen dem Kraftübertragungselement und dem Aufsetzfühler (24) aufgehoben wird, wenn der Aufsetzfühler (24) auf dem Weg von der ersten Stellung in die zweite Stellung die Zwischenstellung passiert.

8. Druckluftnagler nach einem der Ansprüche 1 bis 7, **dadurch gekennzeichnet, dass** das Kraftübertragungselement drehbar an dem Auslöser (14) gelagert ist.

9. Druckluftnagler nach einem der Ansprüche 2 bis 8, **dadurch gekennzeichnet, dass** das Kraftübertragungselement einen Anschlag (32) aufweist, der von dem Aufsetzfühler (24) auf dem Weg von der zweiten Stellung in die erste Stellung mitgenommen wird, wenn der Aufsetzfühler (24) bei betätigtem Auslöser (14) die Zwischenstellung passiert.

10. Druckluftnagler nach einem der Ansprüche 1 bis 9, **dadurch gekennzeichnet, dass** das Kraftübertragungselement eine Betätigungsfläche (40) aufweist, die mit einem Schaltstift (36) des Steuerventils (38) zusammenwirkt.

11. Druckluftnagler nach Anspruch 9 oder 10, **dadurch gekennzeichnet, dass** das Kraftübertragungselement eine Wippe (30) ist, deren eines Ende drehbar an dem Auslöser (14) gelagert ist und deren anderes Ende den Anschlag (32) aufweist.

12. Druckluftnagler nach einem der Ansprüche 1 bis 11, **dadurch gekennzeichnet, dass** der Druckluftnagler eine Zeitsteuerung aufweist, die im Automatikbetrieb eine Taktung für das fortlaufende Eintreiben von Befestigungsmitteln vorgibt.

13. Druckluftnagler nach Anspruch 12, **dadurch gekennzeichnet, dass** die Zeitsteuerung eine Drossel (68) mit einem einstellbaren Öffnungsquerschnitt aufweist, wobei der Öffnungsquerschnitt die Taktung bestimmt.

## Claims

1. Compressed air nail gun, comprising
• a working piston (52) which is connected to a driving ram (50) for driving in a fastening means and to which compressed air is applied when a drive-in process is triggered, and
• a trigger device which has a manually actuatable trigger (14), a placing sensor (24) and a force transmission element which interacts with the trigger (14) and the placing sensor (24) such that it can actuate a control valve (38) and trigger a drive-in process when the trigger (14) and the placing sensor (24) are actuated together, wherein
• the compressed air nail gun is designed to continuously drive in fastening means in the case of continuous actuation of the trigger (14) and the placing sensor (24) in an automatic operation,
• the placing sensor (24) has an adjustment path between a fully actuated, first position and a fully non-actuated, second position, and **characterised in that**
• the trigger device is designed such that the force transmission element does not actuate the control valve (38) when the placing sensor (24) is moved from the second position to the first position when the trigger (14) is actuated.

2. Compressed air nail gun according to claim 1, **characterised in that** the trigger device is designed such that, in the automatic mode, the control valve (38) remains actuated when the trigger (14) is actuated until the placing sensor (24) is moved starting from the first position along the adjustment path to an intermediate position, which is at a predefined distance (84) from the first position.

3. Compressed air nail gun according to claim 2, **characterised in that** the predefined distance (84) is 30% or more of the adjustment path.

4. Compressed air nail gun according to claim 2 or 3, **characterised in that** the predefined distance (84) is 3 mm or more.

5. Compressed air nail gun according to any one of claims 1 to 4, **characterised in that** the adjustment path has an overall length of 8 mm or more.

6. Compressed air nail gun according to any one of claims 1 to 5, **characterised in that** the control valve (38) has a switching pin (36), which can be moved along an actuating path between a fully actuated, first position and a fully non-actuated, second position, having a switching point which is arranged at an intermediate position of the switching pin (36) at a distance from the first position.

7. Compressed air nail gun according to any one of claims 1 to 6, **characterised in that** the force transmission element is arranged relative to the trigger (14) and the placing sensor (24) such that an engagement between the force transmission element and the trigger (14) or between the force transmission element and the placing sensor (24) is eliminated when the placing sensor (24) passes the intermediate position on the path from the first position to the second position.

8. Compressed air nail gun according to any one of claims 1 to 7, **characterised in that** the force transmission element is rotatably mounted on the trigger (14).

9. Compressed air nail gun according to any one of claims 2 to 8, **characterised in that** the force transmission element has a stop (32), which moves with the placing sensor (24) on the path from the second position to the first position when the placing sensor (24) passes the intermediate position when the trigger (14) is actuated.

10. Compressed air nail gun according to any one of claims 1 to 9, **characterised in that** the force transmission element has an actuating surface (40) which interacts with a switching pin (36) of the control valve (38).

11. Compressed air nail gun according to claim 9 or 10, **characterised in that** the force transmission element is a rocker (30), whose one end is rotatably mounted on the trigger (14) and whose other end has the stop (32).

12. Compressed air nail gun according to any one of claims 1 to 11, **characterised in that** the compressed air nail gun has a time controller which specifies a cycle for the continuous driving-in of fastening means in the automatic mode.

13. Compressed air nail gun according to claim 12, **characterised in that** the time controller has a throttle (68) with an adjustable opening cross-section, wherein the opening cross-section determines the cycle.

## Revendications

1. Cloueuse pneumatique dotée
• d'un piston de travail (52) qui est relié à un poussoir d'enfoncement (50) pour enfoncer un dispositif de fixation et qui est alimenté en air comprimé lors du déclenchement d'une opération d'enfoncement, et
• un dispositif de déclenchement comportant un déclencheur (14) pouvant être actionné manuellement, une sonde de position (24) et un élément de transmission de force qui coopère avec le déclencheur (14) et la sonde de position (24), de sorte que, lors d'un actionnement conjoint du déclencheur (14) et de la sonde de position (24), il puisse actionner une vanne de commande (38) et déclencher un processus d'enfoncement,
• la cloueuse pneumatique étant conçue pour enfoncer en continu des moyens de fixation en mode automatique lorsque le déclencheur (14) et la sonde de position (24) sont actionnés en permanence,
• la sonde de position (24) présente une course de réglage entre une première position complètement actionnée et une deuxième position complètement non actionnée et **caractérisée en ce que**
• le dispositif de déclenchement est conçu de telle sorte que l'élément de transmission de force n'actionne pas la vanne de commande (38) lorsque la sonde de position (24) est déplacée de la deuxième position à la première position lorsque le déclencheur (14) est actionné.

2. Cloueuse pneumatique selon la revendication 1, **caractérisée en ce que** le dispositif de déclenchement est conçu de sorte que, en mode automatique lorsque le déclencheur (14) est actionné, la vanne de commande (38) reste actionnée jusqu'à ce que la sonde de position (24) soit déplacée de la première position le long de la course de réglage jusqu'à une position intermédiaire qui présente une distance prédéterminée (84) par rapport à la première position.

3. Cloueuse pneumatique selon la revendication 2, **caractérisée en ce que** la distance prédéterminée (84) est de 30 % ou plus de la course de réglage.

4. Cloueuse pneumatique selon la revendication 2 ou 3, **caractérisée en ce que** la distance prédéterminée (84) est de 3 mm ou plus.

5. Cloueuse pneumatique selon l'une des revendications 1 à 4, **caractérisée en ce que** la course de réglage présente une longueur totale de 8 mm ou plus.

6. Cloueuse pneumatique selon l'une des revendications 1 à 5, **caractérisée en ce que** la vanne de commande (38) présente une broche de commutation (36) mobile le long d'une course d'actionnement entre une première position complètement actionnée et une deuxième position complètement non actionnée, avec un point de commutation qui agencé sur une position intermédiaire de la broche de commutation (36) à une certaine distance de la première position.

7. Cloueuse pneumatique selon l'une des revendications 1 à 6, **caractérisée en ce que** l'élément de transmission de force est agencé, par rapport au déclencheur (14) et à la sonde de position (24), de manière à ce qu'une intervention entre l'élément de transmission de force et le déclencheur (14) ou entre l'élément de transmission de force et la sonde de position (24) soit supprimée lorsque la sonde de position (24) passe par la position intermédiaire lors de sa course de la première position à la deuxième position.

8. Cloueuse pneumatique selon l'une des revendications 1 à 7, **caractérisée en ce que** l'élément de transmission de force est logé en rotation sur le déclencheur (14).

9. Cloueuse pneumatique selon l'une des revendications 2 à 8, **caractérisée en ce que** l'élément de transmission de force présente une butée (32) qui est entraînée par la sonde de position (24) lors de sa course de la deuxième position à la première position lorsque la sonde de position (24) passe par la position intermédiaire lorsque le déclencheur (14) est actionné.

10. Cloueuse pneumatique selon l'une des revendications 1 à 9, **caractérisée en ce que** l'élément de transmission de force présente une surface d'actionnement (40) qui coopère avec une broche de commutation (36) de la vanne de commande (38).

11. Cloueuse pneumatique selon la revendication 9 ou 10, **caractérisée en ce que** l'élément de transmission de force est une bascule (30) dont une extrémité est logée sur le déclencheur (14) et l'autre extrémité est dotée d'une butée (32).

12. Cloueuse pneumatique selon l'une des revendications 1 à 11, **caractérisée en ce que** la cloueuse pneumatique présente une commande temporisée qui, en mode automatique, prescrit une cadence pour l'enfoncement en continu des moyens de fixation.

13. Cloueuse pneumatique selon la revendication 12, **caractérisée en ce que** la commande temporisée comporte un étrangleur (68) avec une section transversale d'ouverture réglable, la section transversale d'ouverture déterminant la cadence.
